# EUROPEAN PATENT SPECIFICATION

(11) **EP 1 631 910 B1**
(45) Date of publication and mention of the grant of the patent: **07.11.2007**
(21) Application number: 03727864.5
(22) Date of filing: 27.05.2003
(51) Int. Cl.: G06F 12/14

(54) **ACCESS PROTECTED BUS SYSTEM**
ZUGRIFFSGESCHÜTZTES BUSSYSTEM
SYSTEME DE BUS A ACCES PROTEGE

(43) Date of publication of application: 08.03.2006
(73) Proprietor: NXP B.V., 5656 AG Eindhoven (NL)
(72) Inventor: PONTIUS, Timothy, A., NL-5656 AA Eindhoven (NL); JENSEN, Rune, H., NL-5656 AA Eindhoven (NL); RABELER, Thorwald, NL-5656 AA Eindhoven (NL)
(74) Representative: Pennings, Johannes
(86) International application number: PCT/IB2003/002359
(87) International publication number: WO 2004/107181

(56) References cited:
- US-A- 4 498 132
- US-A- 5 978 915

## Description

This invention relates to the field of electronic systems, and in particular to an architecture for selectively controlling access to devices within an electronic system.

Electronic systems generally employ a bus structure for communicating data among components within the system. As used herein, a bus is a collection of signals used to provide a path to and from devices connected to the bus, and includes serial buses, parallel buses, and combinations thereof. As is known in the art, the use of a common bus structure often allows for more efficient use of design and development resources. Functional blocks that communicate via the bus can be designed independently, needing only to comply with the protocol established for the bus, rather than complying with myriad requirements of each of the other functional blocks within the system. Further efficiency is gained because these independently designed functional blocks may be suitable for use in other system configurations and applications, thereby distributing the development cost for such reusable blocks over a larger product base. The advantages of a bus architecture and modular design are realized regardless of whether the bus is a local bus within an integrated circuit, a bus on a printed-circuit "mother-board", a bus on a backplane of a component rack, a serial-bus in a daisy-chained string of components, and so on.

An initiator of a data transfer operation in a bus environment typically asserts a data transfer instruction onto the bus. This instruction identifies a target device, to which the instruction is addressed. Each component monitors the bus to determine whether it is the target device; if a particular component is the target device, it responds to the data transfer instruction, otherwise, it remains quiescent. For example, a central processing unit (CPU) may assert a read command to a system bus, specifying a particular target memory address that contains the data that is intended to be read. A subset of this target memory address will generally correspond to a particular ROM or RAM component whose address range includes the target memory address, thereby signaling the particular ROM or RAM component as the target device. The targeted ROM or RAM component responds to this read request by asserting the value of the data at the target memory address onto the bus. In a more complex data transfer operation, the data transfer instruction may initiate a dialog between the initiator and the target before the actual data transfer occurs.

In many systems and applications, restrictions are placed on some or all data transfers. For example, in a media processing system, a user-identification device may be the only device that is permitted to access a permission-register of a video controller. In this example, the video controller is configured to permit or deny access to select content material based on the state of the permission-register. In a conventional processing system, such access control is provided by identifying the initiator in the data transfer instruction, or in the subsequent pre-transfer dialog, and structuring target devices to restrict access to select initiator identifications. Depending upon the degree of security required, the access control may include the use of password identification. For example, when the above example media processing system is first configured, the user-identification device and the video controller may effect a conventional secure key-exchange process, and thereafter use this securely-exchanged key to verify the identification of the data transfer initiator. In other environments, where security is not a concern, the access control may merely be via an agreed upon convention, or via a precautionary warning in a design document. Consider, for example, a media processing system within a DVD player that provides for parental control based on user-identification. In such a system, the likelihood of a hacker attacking the access control of the DVD player to subvert the parental control may be deemed to be slight, compared to the likelihood of a hacker attacking an access controller of a cable or satellite converter to obtain unlimited free movies. In this example, the DVD player may merely be designed with the assumption, or understanding, that only the user-identification device is configured to access the permission-register.

Such access control techniques, however, are vulnerable to subversion by hackers and viruses, or, depending upon the level of security provided, if any, to inappropriate access via accidental programming errors. Generally, the access control system is subverted by falsifying the initiator identification, thereby gaining access rights that are intended to be reserved for the falsely identified initiator. As noted above, such subversion may be avoided by incorporating sophisticated cryptographic verification techniques, but the costs of such avoidance measures often substantially exceed the benefits realized.

From US patent No 5,978,915 it is known to provide for selective access protection for a memory location, based on the address of the instruction that causes a processor to attempt access to the memory location. When the instruction is loaded, its address is stored and subsequently used to access a matrix that defines access rights for instructions from different instruction locations to different access locations.

It is an object of this invention to provide an access control method, device, and architecture that reliably enforce access rights to components within an electronic system. It is a further object of this invention to provide an access control architecture that does not require access control enforcement in each target device. It is a further object of this invention to provide secure access control without requiring the use of cryptographic techniques. It is a further object of this invention to provide programmable access control within an electronic system.

These objects and others are achieved by providing an access control device that inhibits data transfers on a bus between unauthorized initiator-target pairs. A permission-matrix is maintained that identifies the access permission of each initiator relative to each target. The access device monitors the bus and determines the identification of the initiator and the intended target. If the initiator has the appropriate access rights to the target, the bus communication is permitted to occur, otherwise the communication is blocked, and an error signal is asserted. To provide further security, the identifier of initiators that are local to the access control device are communicated to the access control device via a direct wired connection to each initiator.

The invention is explained in further detail, and by way of example, with reference to the accompanying drawings wherein:
Fig. 1 illustrates an example block diagram of a bus system with access control in accordance with this invention.
Fig. 2 illustrates an example access control matrix in accordance with this invention.
Fig. 3 illustrates an example block diagram of an alternative bus system with access control in accordance with this invention.
Throughout the drawings, the same reference numerals indicate similar or corresponding features or functions.

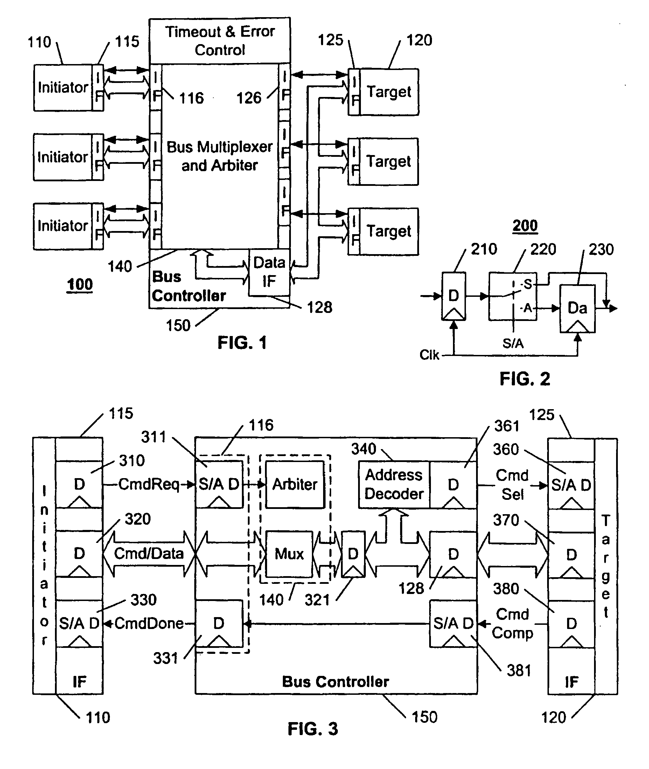

Fig. 1 illustrates an example block diagram of a bus system 100 with access control in accordance with this invention. The system 100 includes a plurality of functional components that communicate with each other via a common bus structure. For ease of understanding, the invention is presented using the paradigm of an initiator 110 of a bus transaction, and a target 120 of the communications with the initiator 110. A functional component may be an initiator 110 or a target 120, or may be both an initiator 110 and a target 120. A memory component, for example, is typically only a target 120, because a memory component does not generally initiate data transfers. In like manner, different regions of a memory space may each constitute a target 120. A CPU in a single processor system, on the other hand is typically an initiator 110, because it generally determines what communications will take place. If, however, the CPU allows interrupts via the bus structure, it will be a target 120 for the initiator of the interrupt. Note that, using this paradigm, the role as initiator 110 and target 120 is independent of the desired direction (read/write, transmit/receive) of data transfer.

Also for ease of understanding, the invention is presented using a centralized bus controller 150 that manages bus activities, including bus multiplexing and access control, timeout and error control, and so on. As will be evident to one of ordinary skill in the art, and discussed further below with regard to Fig. 3, the principles of this invention are applicable to bus structures with distributed bus control, wherein, for example, the arbitration and multiplexing functions are achieved by having each component cooperate to minimize bus contention.

Bus architectures include both "broadcast" buses and "directed" buses. In a broadcast bus, multiple components are commonly connected directly to the bus, so that the data that is presented to the bus is available to each of the components. In a directed bus, the interface to the bus is via a multiplexer that selects which devices are connected to the bus at a given point in time. The example system 100 of Fig. 1 illustrates a bus structure that includes a directed bus for communications with the initiators 110, and a broadcast bus for bus communications with the targets 120, to illustrate that the principles of this invention are applicable to directed buses, broadcast buses, or a combination of each.

Each of the components 110, 120 of the system 100 includes an interface adapter 115, 125, respectively, for communicating via the bus. The communications via the bus include data, which is indicated by the wide arrow symbols, and control signals, which are indicated by single width arrow symbols. In the directed bus structure used by the initiators 110, each interface adapter 115 has a corresponding interface module 116 at the bus controller 150. Both data and control signals are communicated between the interfaces 115, 116. In the broadcast bus structure used by the targets 120, each interface adapter 125 has a corresponding control interface module 126 for the control signals, but a data interface module 128 provides a common interface for data communications with all of the targets 120.

Copending U.S. patent application, "CONFIGURABLE SYNCHRONOUS OR ASYNCHRONOUS BUS INTERFACE", serial number 10/052,276 filed 17 January 2002 for Pontius et al. discloses a bus control architecture that allows for both synchronous and asynchronous communications between each of the initiators 110 or targets 120 and the bus controller 150, thereby allowing for synchronous or asynchronous communications between the initiators 110 and targets 120, and is incorporated by reference herein.

In accordance with this invention, the bus controller 150 includes an identification of access rights among initiators 110 and targets 120. For convenience and ease of understanding, this identification of access rights is presented herein using the paradigm of an access control matrix 160 that is used to control the transfer of data between each initiator 110 and each target 120. One of ordinary skill in the art will recognize that alternative forms of representing access rights may be used, such as lists, rules, and so on, but regardless of the form or format of the access control information, each representation functionally corresponds to matrix that maps the right of each initiator to access each target. For example, to reduce storage requirements, the access control information may be stored as a list of prohibited accesses only, the implication being that each initiator-target pair that is not included in the list is a permitted access. As used herein, the term matrix corresponds to any form of data representation that can be mapped to a conventional matrix form.

Fig. 2 illustrates an example access control matrix 160 in accordance with this invention. The rows labeled A, B, and C in this example matrix 160 correspond to the initiators, InitiatorA, InitiatorB, and InitiatorC of FIG. 1, respectively. The columns labeled 1, 2, and 3 correspond to the targets, Target1, Target2, and Target3 of Fig. 1, respectively. In this example matrix 160, an "a" indicates that all access rights are granted, an "r" indicates that read-only access rights are granted, a "w" indicates that write-only access rights are granted, and a "-" indicates that no access rights are granted. In a simpler embodiment, the access rights may include only a binary "yes" or "no", independent of the direction of data transfer; or, all initiators may have read rights to all devices, and the access rights may merely limit the right to write data to select targets. These alternatives, and others, will be evident to one of ordinary skill in the art in view of this disclosure. For example, in a more complex embodiment, the access control matrix may include an indication of capabilities, as well as rights, such as initiator-target pairs that can effect block-data transfers, and so on.

In accordance with another aspect of this invention, the access control matrix 160 is preferably programmable, to allow for the creation and modification of access rights as initiators 110 or targets 120 are added or removed from the system 100. To control the access to the access control matrix 160, the access control matrix includes the column labeled "0", which, in this example, corresponds to the bus controller 150, and specifically the access control matrix 160.

As illustrated in the example matrix 160 of FIG. 2, InitiatorB is the only device that is permitted to access Target3, and this access is limited to writing data to Target3, as indicated by the "w" at the intersection of row B and column 3. InitiatorB may correspond, for example, to the example user-identification device, and Target3 may correspond to the permission-register of the example video-controller, as presented in the "Background of the Invention", above.

As discussed above, the bus controller 150 of FIG. 1 is configured to receive data transfer requests from each initiator 110, and to selectively enable the target 120 of this data transfer request, based on the access rights indicated by the access control matrix 160. Using the example matrix 160 of FIG. 2, if Initiator A or InitiatorC submits a data transfer request to Target3, the bus controller 150 will reject the request, and will not enable Target3 to effect the requested transfer, based on the "-" (no-rights) entry in column "3" of the access control matrix 160. In like manner, if InitiatorB requests a data transfer from Target3 to InitiatorB (i.e. a "read" request), the controller 150 will reject the request. If, on the other hand, InitiatorB requests a data transfer from InitiatorB to Target3 (i.e. a "write" request), the controller 150 will enable Target3 to receive the data, based on the "w" (write-only) entry in the access control matrix 160.

In like manner, based on the example access control matrix 160 of Fig. 2, the bus controller 150 of Fig. 1 will allow InitiatorA to read or write to the access control matrix 160, corresponding to the "a" (all-rights) entry in the first row of column "0", but will prevent each of the other initiators 110 from accessing the access control matrix 160, based on the "-" (no-rights) entry in each of the other rows of column "0". In this manner, only InitiatorA is permitted to modify the access rights between initiators 110 and targets 120.

Note that by maintaining and enforcing the access rights information at the bus controller 150, each of the targets 120 are relieved of the responsibility of maintaining and enforcing the access rights. Note also that in the example embodiment of Fig. 1, each initiator is assigned to a specific input port, or interface 116 of the bus controller 150. If the bus controller 150 and the access control matrix 160 are configured to define access rights relative to the input ports, then the identity of an initiator can only be falsified by a physical change to the system, such as the removal of the authorized initiator 110 and a substitution of a bogus initiator at the input port to the bus controller. If the connection between the initiators 110 and the bus controller 150 are "hard-wired", such as the connection of components to a bus within an integrated circuit, or on a printed circuit board, the security provided by the controller 150 is quite substantial. Because of the complexities associated with modifying the internal circuitry of an integrated circuit, the security level provided by a bus within an integrated circuit is significantly greater than a bus on a printed circuit board. If the connection between the initiators 110 and the bus controller 150 is via a plug-and-socket combination, the substitution is easier, but still requires gaining physical access to the controller 150. As such, the security provided by this invention is virtually unassailable by a remote hacker or a remote virus.

Fig. 3 illustrates an example block diagram of an alternative bus system 300 with access control in accordance with this invention. In this example, each device 320 is connected parallel to each other on the bus. While not involved in a data transfer, each device 320 maintains an 'inactive' state on the bus. When a device 320 desires to initiate a data transfer, the device 320 asserts an 'active' state on the bus. The active and inactive states are defined such that the active state overrides the inactive states. For example, a logic-high inactive state is common, wherein each device 320 couples the bus to a logic-high value through a relatively high impedance. To assert an active state, a device 320 couples the bus to a logic-low value through a very low impedance. Because the coupling to the logic-low value is via a very low impedance while the coupling to the logic-high value is via one or more high impedance paths, the bus is driven to the logic-low value. Such a configuration is commonly termed a Wired-AND bus configuration, because if any input to the bus is a logic-low value, the state of the bus will be a logic-low value, regardless of the values from the other inputs to the bus, thereby emulating the function of an AND gate. Wired-OR bus configurations are also common, wherein if any input to the bus is at a logic-high value, the bus will be forced to a logic-high value, regardless of the other inputs to the bus, thereby emulating the function of an OR gate.

In this embodiment, an access controller 310 is coupled to the bus to monitor data transfer requests from each of the devices 320 Device 1, Device2, ... DeviceN. Because the configuration of the bus is such that each device 320 is in parallel with each other device 320, there is no explicit distinction between initiators and targets in the structure of the bus. The data transfer request includes the explicit identification of the initiating device, and the intended target device. Optionally, a hybrid embodiment could be used, wherein each initiating device includes an identification signal that is directly wired to the access controller 310 to identify the initiator of each transaction on the bus, thereby providing for the above-mentioned physical security features of this invention.

The access controller 310 determines whether the transfer is authorized, based on an identification of access rights. In this example embodiment, an access control matrix 160, as discussed above, provides the predefined access rights in the form of a matrix wherein both the rows and columns are associated with devices, rather than specific initiators and targets.

If the transfer is not authorized, the access controller 310 asserts one or more active signals onto the bus to prevent the data transfer. For example, if the bus protocol requires a transferring device 320 to provide a clocking signal to effect the transfer, the controller 310 merely asserts a continuous active state on the clock line, thereby preventing any other device 320 from toggling the line. Alternatively, the controller 310 may merely assert a continuous active state on the data lines, thereby preventing any other device 320 from asserting data values corresponding to the inactive state. In a preferred embodiment, the bus protocol includes a "reset" state corresponding to the assertion of a continuous active state for an extended duration. According to this protocol, when any device 320 detects this reset state, the device 320 must terminate any data transfers and release the bus. Optionally, the bus controller 310 can be configured to follow its transfer-blocking operation with an error message to the unauthorized initiator, to avoid having the initiator tying up the bus with continued attempts to effect the unauthorized transfer.

The foregoing merely illustrates the principles of the invention. It will thus be appreciated that those skilled in the art will be able to devise various arrangements which, although not explicitly described or shown herein, embody the principles of the invention and are thus within its spirit and scope. For example, not all initiators and/or targets and/or devices 320 need be explicitly included in the access control matrix 160. The access control matrix 160 could be configured to only include remote initiators or devices, and/or the access control matrix 160 could be configured to only contain sensitive targets. Similarly, each initiator and/or target could be identified as belonging to a specific class, based, for example, on a subset of its address, and the access control matrix 160 may identify access rights based on the class of the initiator and/or the class of the target. In like manner, just as one device may correspond to both an initiator and a target, one device may correspond to multiple initiators and/or multiple targets. That is, a device may have different access permissions based on the particular user, the particular application that the user is using, particular subsystems within the device, and so on. Such alternative access permissions may be effected by implementing multiple entries in the access control matrix, thereby providing for 'virtual devices' within a common physical device. For example, an initiator may be encoded using two sets of permissions, one set to represent the initiator when it is in a "user" mode, and another set to represent the initiator when it is in an "administrator" or "kernel" mode. These and other system configuration and optimization features will be evident to one of ordinary skill in the art in view of this disclosure, and are included within the scope of the following claims.

## Claims

1. An electronic system (100, 300) comprising:
- a plurality of devices (110, 120) that are configured to communicate signals among each other,
- an access control matrix (160); and
- an access controller (140, 310), operably coupled to the plurality of devices (110, 120) and to the access control matrix (160), that is configured to:
- receive a data transfer request from a first device of the plurality of devices (110, 120) for effecting a data transfer with a second device of the plurality of devices (110, 120), **characterized in that** the access control matrix (16) identifies access rights between pairs of devices of the plurality of devices (110, 120), and **in that** the access controller is configured to
- selectively inhibit the data transfer between the first device and the second device, based on the access rights between the pair of devices (110, 120) corresponding to the first device and the second device.

2. The electronic system (100) of claim 1, wherein the access controller (140) is operably coupled in series between the first device and the second device.

3. The electronic system (100) of claim 2, wherein
- the first device is coupled to the access controller (140) via an input port of a plurality of input ports of the access controller (140), and
- the access control matrix (160) identifies the access rights between the first device and the second device based on the input port corresponding to the first device.

4. The electronic system (100, 300) of claim 1, wherein the access controller (140, 310) inhibits the data transfer between the first device and the second device via control of an enabling signal associated with the second device.

5. The electronic system (300) of claim 1, wherein the access controller (310) is operably coupled in parallel with the first device and the second device via a bus that is used to communicate the signals between the first device and the second device.

6. The electronic system (100, 300) of claim 5, wherein the access controller (140, 310) selectively inhibits the data transfer between the first device and the second device by asserting a signal state onto the bus that prevents the first device from changing the signal state on the bus.

7. The electronic system (100, 300) of claim 1, wherein the access control matrix (160) is configured to identify the access rights between the pairs of devices (110, 120) based on a classification of one or more of the plurality of devices (110, 120).

8. The electronic system (100, 300) of claim 1, wherein the plurality of devices (110, 120) include at least one of: a video processing device, a user-identification device, a security device, a memory device, and a processing device.

9. A method of controlling access, **characterized in that** the method controls access to a plurality of target devices (120), the method including
- determining an identification of an initiator device (110) that is attempting to access a select target device (120) of the plurality of target devices,
- determining a predefined access right between the initiator device (110) and the select target device (120), based on the identification of the initiator device (110), and
- selectively inhibiting access to the select target device (120), based on the predefined access right between the initiator device (110) and the select target device (120).

10. The method of claim 9, wherein selectively inhibiting the access to the select target device (120) includes controlling an enabling signal of the select target device (120).

11. The method of claim 9, wherein selectively inhibiting the access to the select target device (120) includes asserting a signal state onto a bus that prevents the initiator device (110) from changing the signal state on the bus.

12. The method of claim 9, wherein determining the predefined access right between the initiator device (110) and the select target device (120) is based on at least one of a classification associated with the initiator device (110), and a classification associated with the select target device (120).

## Patentansprüche

1. Ein elektronisches System (100, 300), umfassend:
- eine Mehrzahl von Einrichtungen (110, 120), die so konfiguriert sind, dass sie Signale untereinander übertragen,
- eine Zugriffssteuerungsmatrix (160), und
- eine Zugriffssteuerungseinrichtung (140, 310), die betriebsbereit an die Mehrzahl von Einrichtungen (110, 120) und an die Zugriffssteuerungsmatrix (160) gekoppelt und so konfiguriert ist, dass sie:
- eine Datentransferanforderung von einer ersten Einrichtung aus der Mehrzahl von Einrichtungen (110, 120) empfängt, um einen Datentransfer mit einer zweiten Einrichtung aus der Mehrzahl von Einrichtungen (110, 120) zu vollziehen, **dadurch gekennzeichnet, dass** die Zugriffssteuerungsmatrix (16) Zugriffsrechte zwischen Paaren von Einrichtungen aus der Mehrzahl von Einrichtungen (110, 120) kennzeichnet, und dass die Zugriffssteuerungseinrichtung so konfiguriert ist, dass sie
- den Datentransfer zwischen der ersten Einrichtung und der zweiten Einrichtung auf der Grundlage der Zugriffsrechte zwischen dem Paar von Einrichtungen (110, 120), die der ersten Einrichtung und der zweiten Einrichtung entsprechen, selektiv sperrt.

2. Das elektronische System (100) nach Anspruch 1, wobei die Zugriffssteuerungseinrichtung (140) betriebsbereit zwischen der ersten Einrichtung und der zweiten Einrichtung in Reihe gekoppelt ist.

3. Das elektronische System (100) nach Anspruch 2, wobei
- die erste Einrichtung über einen Eingabeport aus einer Mehrzahl von Eingabeports der Zugriffssteuerungseinrichtung (140) an die Zugriffssteuerungseinrichtung (140) gekoppelt ist, und
- die Zugriffssteuerungsmatrix (160) die Zugriffsrechte zwischen der ersten Einrichtung und der zweiten Einrichtung auf der Grundlage des Eingabeports, der der ersten Einrichtung entspricht, kennzeichnet.

4. Das elektronische System (100, 300) nach Anspruch 1, wobei die Zugriffssteuerungseinrichtung (140, 310) den Datentransfer zwischen der ersten Einrichtung und der zweiten Einrichtung mittels Steuerung eines mit der zweiten Einrichtung verknüpften Freigabesignals sperrt.

5. Das elektronische System (300) nach Anspruch 1, wobei die Zugriffssteuerungseinrichtung (310) betriebsbereit über einen Bus, der zur Übertragung der Signale zwischen der ersten Einrichtung und der zweiten Einrichtung verwendet wird, mit der ersten Einrichtung und der zweiten Einrichtung parallel gekoppelt ist.

6. Das elektronische System (100, 300) nach Anspruch 5, wobei die Zugriffssteuerungseinrichtung (140, 310) den Datentransfer zwischen der ersten Einrichtung und der zweiten Einrichtung **dadurch** selektiv sperrt, dass sie mittels Assertion einen Signalzustand auf den Bus setzt, der verhindert, dass die erste Einrichtung den Signalzustand auf dem Bus ändert.

7. Das elektronische System (100, 300) nach Anspruch 1, wobei die Zugriffssteuerungsmatrix (160) so konfiguriert ist, dass sie die Zugriffsrechte zwischen den Paaren von Einrichtungen (110, 120) auf der Grundlage einer Klassifizierung einer oder mehrerer Einrichtungen aus der Mehrzahl von Einrichtungen (110, 120) kennzeichnet.

8. Das elektronische System (100, 300) nach Anspruch 1, wobei die Mehrzahl von Einrichtungen (110, 120) aus einer Auswahl, die eine Bildverarbeitungseinrichtung, eine Benutzerkennungseinrichtung, eine Sicherheitseinrichtung, eine Speichereinrichtung und eine Verarbeitungseinrichtung umfasst, mindestens eine Einrichtung einschließt.

9. Ein Verfahren zur Steuerung des Zugriffs, **dadurch gekennzeichnet, dass** das Verfahren den Zugriff auf eine Mehrzahl von Zieleinrichtungen (120) steuert, wobei das Verfahren einschließt:
- Bestimmen einer Kennung einer Initiatoreinrichtung (110), die versucht, auf eine ausgewählte Zieleinrichtung (120) aus einer Mehrzahl von Zieleinrichtungen zuzugreifen,
- Bestimmen eines vordefinierten Zugriffsrechts zwischen der Initiatoreinrichtung (110) und der ausgewählten Zieleinrichtung (120) auf der Grundlage der Kennung der Initiatoreinrichtung (110), und
- selektives Sperren des Zugriffs auf die ausgewählte Zieleinrichtung (120) auf der Grundlage des vordefinierten Zugriffsrechts zwischen der Initiatoreinrichtung (110) und der ausgewählten Zieleinrichtung (120).

10. Das Verfahren nach Anspruch 9, wobei das selektive Sperren des Zugriffs auf die ausgewählte Zieleinrichtung (120) die Steuerung eines Freigabesignals der ausgewählten Zieleinrichtung (120) einschließt.

11. Das Verfahren nach Anspruch 9, wobei das selektive Sperren des Zugriffs auf die ausgewählte Zieleinrichtung (120) die Assertion eines Signalzustands auf einen Bus einschließt, der verhindert, dass die Initiatoreinrichtung (110) den Signalzustand auf dem Bus ändert.

12. Das Verfahren nach Anspruch 9, wobei die Bestimmung des vordefinierten Zugriffsrechts zwischen der Initiatoreinrichtung (110) und der ausgewählten Zieleinrichtung (120) auf der Grundlage einer mit der Initiatoreinrichtung (110) verknüpften Klassifizierung und/oder einer mit der ausgewählten Zieleinrichtung (120) verknüpften Klassifizierung erfolgt.

## Revendications

1. Système électronique (100, 300) comprenant :
- une pluralité de dispositifs (110, 120) qui sont configurés pour communiquer des signaux les uns parmi les autres;
- une matrice de commande d'accès (160); et
- une unité de commande d'accès (140, 310), couplée de manière opérationnelle à la pluralité de dispositifs (110, 120) et à la matrice de commande d'accès (160), qui est configurée pour :
- recevoir une demande de transfert de données d'un premier dispositif de la pluralité de dispositifs (110, 120) pour effectuer un transfert de données avec un second dispositif de la pluralité de dispositifs (110, 120), **caractérisé en ce que** la matrice de commande d'accès (16) identifie des droits d'accès entre des paires de dispositifs de la pluralité de dispositifs (110, 120), et **en ce que** l'unité de commande d'accès est configurée pour
- inhiber sélectivement le transfert de données entre le premier dispositif et le second dispositif, en se basant sur les droits d'accès entre la paire de dispositifs (110, 120) correspondant au premier dispositif et au second dispositif.

2. Système électronique (100) selon la revendication 1, dans lequel l'unité de commande d'accès (140) est couplée de manière opérationnelle en séries entre le premier dispositif et le second dispositif.

3. Système électronique (100) selon la revendication 2, dans lequel
- le premier dispositif est couplé à l'unité de commande d'accès (140) via un port d'entrée d'une pluralité de ports d'entrée de l'unité de commande d'accès (140), et
- la matrice de commande d'accès (160) identifie les droits d'accès entre le premier dispositif et le second dispositif en se basant sur le port d'entrée correspondant au premier dispositif.

4. Système électronique (100, 300) selon la revendication 1, dans lequel l'unité de commande d'accès (140, 310) inhibe le transfert de données entre le premier dispositif et le second dispositif via une commande d'un signal d'activation associé au second dispositif.

5. Système électronique (300) selon la revendication 1, dans lequel l'unité de commande d'accès (310) est couplée de manière opérationnelle en parallèle avec le premier dispositif et le second dispositif via un bus qui est utilisé pour communiquer les signaux entre le premier dispositif et le second dispositif.

6. Système électronique (100, 300) selon la revendication 5, dans lequel l'unité de commande d'accès (140, 310) inhibe sélectivement le transfert de données entre le premier dispositif et le second dispositif en affirmant un état de signal sur le bus qui empêche le premier dispositif de changer l'état de signal sur le bus.

7. Système électronique (100, 300), selon la revendication 1, dans lequel la matrice de commande d'accès (160) est configurée pour identifier les droits d'accès entre les paires de dispositifs (110, 120) en se basant sur une classification d'un ou plusieurs de la pluralité de dispositifs (110, 120).

8. Système électronique (100, 300) selon la revendication 1, dans lequel la pluralité de dispositifs (110, 120) comprend au moins l'un de : un dispositif de traitement vidéo, un dispositif d'identification d'utilisateur, un dispositif de sécurité, un dispositif de mémoire et un dispositif de traitement.

9. Procédé de commande d'accès, **caractérisé en ce que** le procédé commande l'accès à une pluralité de dispositifs cibles (120), le procédé comprenant les étapes consistant à
- déterminer une identification d'un dispositif d'initiateur (110) qui tente d'accéder à un dispositif cible de sélection (120) de la pluralité de dispositifs cibles,
- déterminer un droit d'accès prédéfini entre le dispositif d'initiateur (110) et le dispositif cible de sélection (120), en se basant sur l'identification du dispositif d'initiateur (110), et
- inhiber sélectivement l'accès au dispositif cible de sélection (120), en se basant sur le droit d'accès prédéfini entre le dispositif d'initiateur (110) et le dispositif cible de sélection (120).

10. Procédé selon la revendication 9, dans lequel l'inhibition sélective de l'accès au dispositif cible de sélection (120) comprend la commande d'un signal d'activation du dispositif cible de sélection (120).

11. Procédé selon la revendication 9, dans lequel l'inhibition sélective de l'accès au dispositif cible de sélection (120) comprend l'affirmation d'un état de signal sur un bus qui empêche le dispositif d'initiateur (110) de changer l'état de signal sur le bus.

12. Procédé selon la revendication 9, dans lequel la détermination du droit d'accès prédéfini entre le dispositif d'initiateur (110) et le dispositif cible de sélection (120) est basée sur au moins l'une de: une classification associée au dispositif d'initiateur (110), et une classification associée au dispositif cible de sélection (120).
